# EUROPEAN PATENT APPLICATION

(11) **EP 4 586 455 A1**
(43) Date of publication of application: **16.07.2025**
(21) Application number: 24808832.0
(22) Date of filing: 22.11.2024
(51) Int. Cl.: H02J 7/00, H04M 1/02

(54) **ELECTRONIC DEVICE FOR PERFORMING HEAT CONTROL DURING CHARGING, OPERATING METHOD THEREOF, AND STORAGE MEDIUM**

(30) Priority: 27.11.2023 KR 20230166898; 24.01.2024 KR 20240010788
(71) Applicant: Samsung Electronics Co., Ltd, Suwon-si, Gyeonggi-do 16677 (KR)
(72) Inventor: WOO, Kwangtaek, Suwon-si, Gyeonggi-do 16677 (KR); SO, Hyeonbin, Suwon-si, Gyeonggi-do 16677 (KR); OH, Jaemin, Suwon-si, Gyeonggi-do 16677 (KR); KIM, Seonghun, Suwon-si, Gyeonggi-do 16677 (KR); AN, Jinwan, Suwon-si, Gyeonggi-do 16677 (KR); OH, Deukkyu, Suwon-si, Gyeonggi-do 16677 (KR)
(74) Representative: Nederlandsch Octrooibureau
(86) International application number: PCT/KR2024/018665
(87) International publication number: WO 2025/116438

(57) **Abstract**

According to an embodiment, an electronic device 101 may comprise a plurality of batteries 289a, 289b, 389a, 389b, 389c, 489, at least one processor 120, 420, and memory 130, 430 storing instructions. According to an embodiment, the instructions, when executed by the at least one processor, may enable the electronic device to identify that a plurality of batteries are being charged using external power, identify an application being executed while the plurality of batteries are being charged using the external power and, in case that the application being executed corresponds to a first application, continue charging the plurality of batteries using the external power, in case that the application being executed corresponds to a second application, determining whether to pause or continue charging at least one of the plurality of batteries based on context information associated with the plurality of batteries, and if it is determined to continue charging at least one of the plurality of batteries based on the context information associated with the plurality of batteries, controlling to pause charging of one battery of the plurality of batteries and perform charging of a remaining battery of the plurality of batteries using the external power based on the context information associated with the plurality of batteries.

## Description

### [Technical Field]

An embodiment of the disclosure relates to an electronic device for controlling heating during charging, an operation method thereof, and storage medium.

### [Background Art]

The electronic device may process a large amount of data to perform various functions and may consume more power, so it comes equipped with a large-capacity battery. Further, the capacity (W) of chargers for supplying power is also gradually increasing as faster charging is required for a large-capacity battery.

As the use time of the electronic device gradually increases, current consumption inevitably increases due to an increase in data processing amount and, as power is supplied to other components, heat generation of the battery increases, so that the temperature of the electronic device may increase. Further, when the electronic device is used in a state in which a charger is connected to the electronic device, heat may be generated during charging. Accordingly, control of heat generation may be important when charging an electronic device while using the electronic device.

The above-described information may be provided as related art for the purpose of helping understanding of the disclosure. No claim or determination is made as to whether any of the foregoing is applicable as background art in relation to the disclosure.

### [Disclosure of Invention]

### [Solution to Problems]

According to an embodiment, an electronic device 101 may comprise a plurality of batteries 289a, 289b, 389a, 389b, 389c, 489, at least one processor 120, 420, and memory 130, 430 storing instructions. According to an embodiment, the instructions may be configured to, when executed by the at least one processor, enable the electronic device to identify that a plurality of batteries are being charged using external power. According to an embodiment, the instructions may be configured to enable the electronic device to identify an application being executed while the plurality of batteries are being charged using the external power.

According to an embodiment, the instructions may be configured to enable the electronic device to, in case that the application being executed corresponds to a first application, continue charging the plurality of batteries using the external power.

According to an embodiment, the instructions may be configured to enable the electronic device to, in case that the application being executed corresponds to a second application, determine whether to pause charging all of the plurality of batteries, or to or continue charging all of the plurality of batteries, or to pause charging at least one of the plurality of batteries, while continuing charging a remaining battery of the plurality of batteries, based on context information associated with the plurality of batteries.

According to an embodiment, the instructions may be configured to enable the electronic device to, if it is determined to pause charging at least one of the plurality of batteries, while continuing charging a remaining battery of the plurality of batteries based on the context information associated with the plurality of batteries, control to pause charging of the at least one battery of the plurality of batteries and perform charging of the remaining battery of the plurality of batteries using the external power based on context information associated with the plurality of batteries.

According to an embodiment, a method for performing heat generation control during charging by an electronic device 101 comprising a plurality of batteries may comprise identifying that the plurality of batteries 289a, 289b, 389a, 389b, 389c, 489 are being charged using external power.

According to an embodiment, the method may comprise identifying an application being executed while the plurality of batteries are being charged using the external power.

According to an embodiment, the method may comprise, in case that the application being executed corresponds to a first application, continuing charging the plurality of batteries using the external power.

According to an embodiment, the method may comprise, in case that the application being executed corresponds to a second application, determining whether to pause charging all of the plurality of batteries, or to or continue charging all of the plurality of batteries, or to pause charging at least one of the plurality of batteries, while continuing charging a remaining battery of the plurality of batteries, based on context information associated with the plurality of batteries.

According to an embodiment, the method may comprise, if it is determined to pause charging at least one of the plurality of batteries, while continuing charging a remaining battery of the plurality of batteries based on the context information associated with the plurality of batteries, controlling to pause charging of the at least one battery of the plurality of batteries and perform charging of the remaining battery of the plurality of batteries using the external power based on the context information associated with the plurality of batteries.

According to an embodiment, in a storage medium storing at least one computer-readable instruction, the at least one instruction may enable an electronic device 101 comprising a plurality of batteries to, when executed by at least one processor 120 or 420 of the electronic device, perform at least one operation. The at least one operation may comprise identifying that the plurality of batteries 289a, 289b, 389a, 389b, 389c, and 489 are being charged using external power. According to an embodiment, the at least one operation may comprise identifying an application being executed while the plurality of batteries are being charged using the external power.

According to an embodiment, the at least one operation may comprise, in case that the application being executed corresponds to a first application, continuing charging the plurality of batteries using the external power.

According to an embodiment, the at least one operation may comprise, in case that the application being executed corresponds to a second application, determining whether to pause charging all of the plurality of batteries, or to or continue charging all of the plurality of batteries, or to pause charging at least one of the plurality of batteries, while continuing charging a remaining battery of the plurality of batteries, based on context information associated with the plurality of batteries.

According to an embodiment, the at least one operation may comprise, if it is determined to pause charging at least one of the plurality of batteries, while continuing charging a remaining battery based on the context information associated with the plurality of batteries, controlling to pause charging of one battery of the plurality of batteries and perform charging of a remaining battery of the plurality of batteries using the external power based on the context information associated with the plurality of batteries.

### [Brief Description of Drawings]

FIG. 1 is a block diagram illustrating an electronic device in a network environment according to an embodiment;
FIG. 2A is a view illustrating an unfolded status of a first-type electronic device according to an embodiment;
FIG. 2B is a view illustrating a state in which batteries are disposed in a first-type electronic device according to an embodiment;
FIG. 3A is a view illustrating a folded status of a second-type electronic device according to an embodiment;
FIG. 3B is a view illustrating a state in which batteries are disposed in a second-type electronic device according to an embodiment;
FIG. 4 is a block diagram illustrating an internal configuration of an electronic device according to an embodiment;
FIG. 5 is a flowchart illustrating operations of an electronic device for performing heat generation control during charging according to an embodiment;
FIG. 6 is a view illustrating an example screen for a pause charging function according to an embodiment;
FIG. 7 is a side view illustrating a folded status of a first-type electronic device according to an embodiment;
FIG. 8 is a side view illustrating a folded status of a second-type electronic device according to an embodiment;
FIG. 9 is a perspective view illustrating a partially folded status of a first-type electronic device according to an embodiment;
FIG. 10 is a perspective view illustrating a partially folded status of a second-type electronic device according to an embodiment; and
FIG. 11 is a view illustrating a state in which a first-type electronic device is gripped according to an embodiment.

The same or similar reference denotations may be used to refer to the same or similar elements throughout the specification and the drawings.

### [Mode for the Invention]

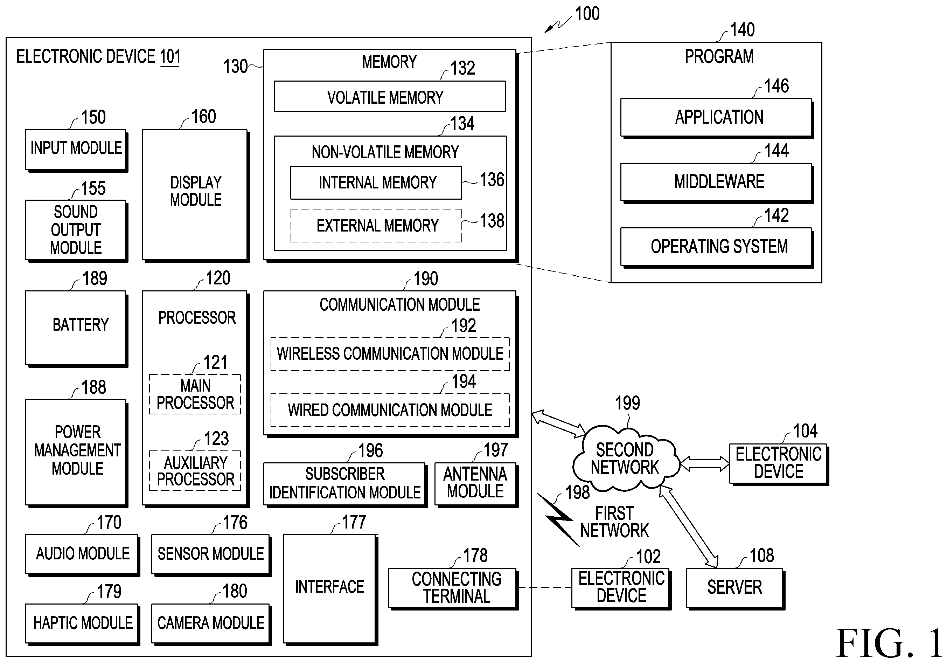

FIG. 1 is a block diagram illustrating an electronic device 101 in a network environment 100 according to various embodiments. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

In the following description, the components easy to understand from the description of the above embodiments are denoted with or without the same reference numerals and their detailed description may be skipped. According to an embodiment of the disclosure, an electronic device may be implemented by selectively combining configurations of different embodiments, and the configuration of one embodiment may be replaced by the configuration of another embodiment. However, it is noted that the present invention is not limited to a specific drawing or embodiment.

When the electronic device 101 is used in a state in which the power charger is connected to the electronic device 101, heat may be generated during charging. Further, as more heat is generated, heat generation on the surface of the electronic device 101, including around the battery, may also occur. For example, if the battery or its surroundings are overheated while the user uses the electronic device 101 in her hand, the user of the electronic device 101 may feel uncomfortable and even may have low-temperature burns due to skin contact.

Heat generation control may be performed to reduce or prevent heat generation during charging in the electronic device 101. Heat generation control may be performed so that the electronic device 101 does not run into an over temperature circumstance, e.g., in a manner determined by the manufacturer. One method for heat generation control during charging is a pause charging (or temporarily stop charging) function. For example, the pause charging function may be referred to as a 'USB power delivery pause charging function.' When the electronic device 101 is used in a state in which a charger is connected to the electronic device 101, power is supplied to the components necessary for operation and for charging the battery. The pause charging function may be a function for minimizing battery charging while supplying most of the power to the electronic device 101 so as to reduce influence by simultaneous power supply for battery charging and game execution when a high-spec application, e.g., a game application, is executed. This function may be executed in a state in which the battery capacity is 20% or more while a high-spec application is running while the charge is connected, although it is in an on (or active) state.

The pause charging function may increase power efficiency while minimizing heat generation. However, since battery charging is limited based on a single setting, battery charging may not actually be done. For example, a high-spec application processes a high load of data and accordingly consumes more power, potentially causing a temperature rise of the electronic device 101. This leads to the need for a method for efficiently controlling battery charging when the user connects a charger for charging although heat generation control is performed in a circumstance where data processing rate needs to be increased while the pause charging function is active.

In an embodiment, there may be provided an electronic device, an operation method thereof, and a storage medium, for performing heat generation control during charging to ensure adaptive battery charging depending on the heat generation context related to the battery when a charger is connected for charging while the pause charging function is active.

In an embodiment, during charging in an electronic device 101 including two or more batteries, a battery for which heat generation is to be limited pauses charging while a battery for which heat generation is not limited is charged, so that a charging function optimized for the user's intent to charge the battery itself may be provided. In an embodiment, it is possible to ensure both seamless operation performance and stable battery charging by minimizing battery charging limitations due to heat generation.

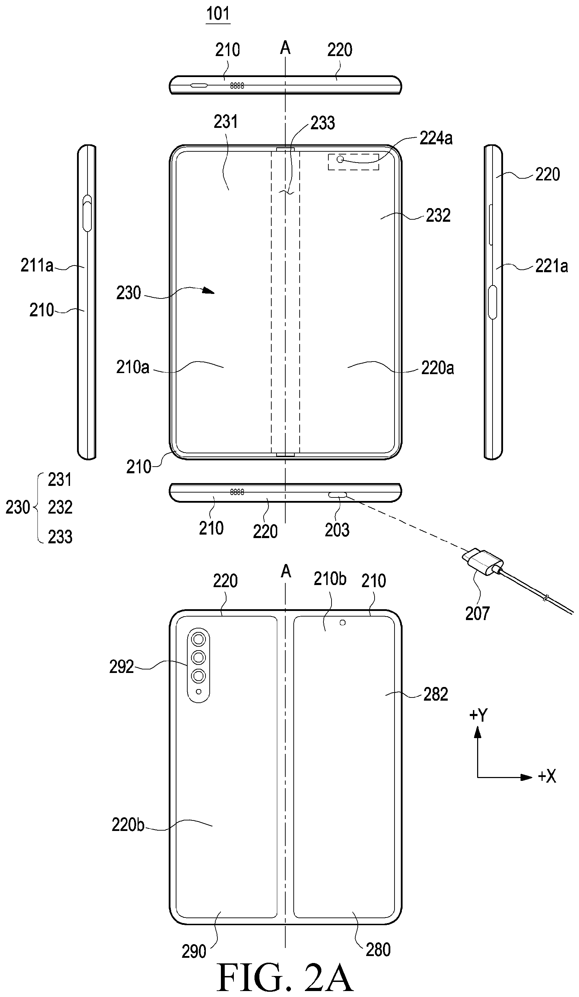

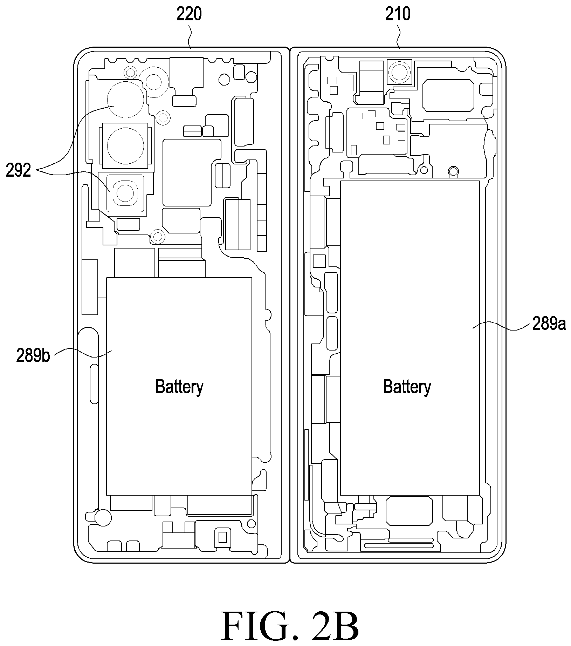

FIG. 2A is a view illustrating an unfolded status of a first-type electronic device according to an embodiment. FIG. 2B is a view illustrating a state in which batteries are disposed in a first-type electronic device according to an embodiment.

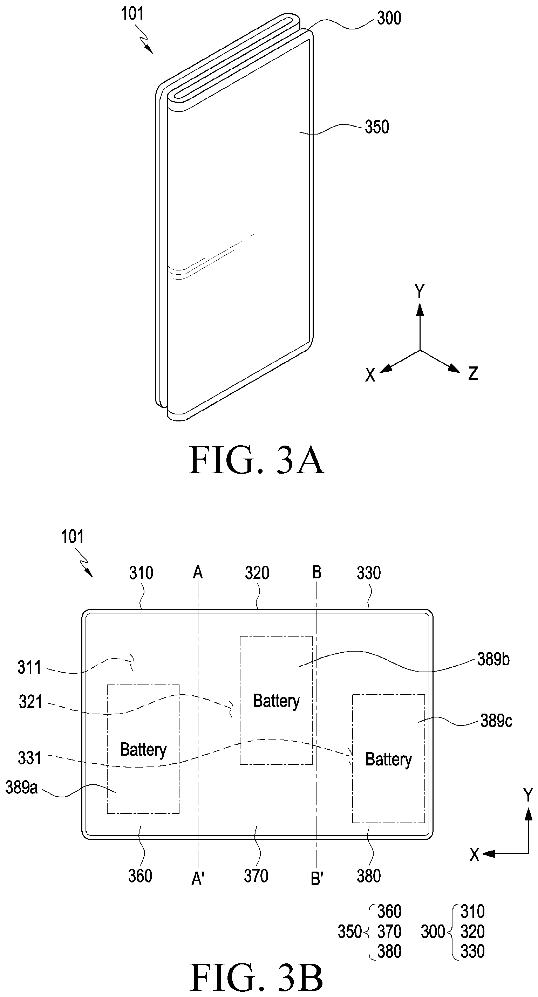

In describing embodiments of the disclosure, illustrated is a configuration in which a pair of housings (e.g., a first housing 210 and a second housing 220) are rotatably coupled. However, it should be noted that the electronic device 101 according to various embodiments of the disclosure is not limited thereto. For example, an electronic device 101 according to an embodiment of the disclosure may include three or more housings (see, e.g., FIG. 3A). In the embodiments disclosed below, a "pair of housings" may mean two housings rotatably coupled to each other among three or more housings.

In the following detailed description, "+X/-X direction", "+Y/-Y direction" or "+Z/-Z direction" may be mentioned, and it should be noted that the Cartesian coordinate system as described below is described based on the width direction X, the length direction Y, or the thickness direction Z of the housing 210 in FIGS. 2A and 2B. For example, various changes may be made to the above definitions according to embodiments or when another structure of the electronic device 101 is set as the reference. Further, in the following detailed description, 'front surface' or 'rear surface' may be mentioned for the electronic device 101 or the housings 210 and 220 and, regardless of the relative positions (e.g., unfolded position or folded position) of the housings 210 and 220, the surface where the foldable display 230 of FIG. 2A is disposed may be defined as the front surface of the electronic device 101 (or housings 210 and 220), and the surface opposite to the surface where the foldable display 230 is disposed may be defined as the rear surface of the electronic device 101 (or housings 210 and 220). According to an embodiment, a "configuration in which the electronic device 101 includes a display" may be mentioned and, here, the "display" may mean a flexible display 230.

Referring to FIGS. 2A and 2B, in an embodiment, an electronic device 101 may include a foldable housing and a flexible or foldable display 230 disposed in a space formed by housings 210 and 220. According to an embodiment, the foldable housing may include a pair of housings 210 and 220 rotatably connected to each other. According to an embodiment, the first housing 210 and the second housing 220 are disposed on two opposite sides of the folding axis A and be substantially symmetrical in shape with respect to the folding axis. According to an embodiment, the angle or distance between the first housing 210 and the second housing 220 may be varied depending on whether the electronic device 101 is in the unfolded status, the folded status, or the partially unfolded (or partially folded) intermediate status.

According to an embodiment, the surface where the display 230 may be defined as a first surface 210a and/or a third surface 220a of the electronic device 101 and/or the housings 210 and 220. In another embodiment, a surface opposite to the first surface 210a and/or the third surface 220a may be defined as a second surface 210b and/or a fourth surface 220b of the electronic device 101 and/or the housings 210 and 220. In another embodiment, a surface surrounding a space between the first surface 210a and the second surface 210b and/or a space between the third surface 220a and the fourth surface 220b may be defined as a side surface (e.g., the first side surface 211a and the second side surface 221a) of the electronic device 101 and/or the housings 210 and 220.

According to an embodiment, the housings 210 and 220 may include a first housing (or first housing structure) 210, a second housing (or second housing structure) 220 including a sensor area 224a, a first rear cover 280, and/or a second rear cover 290. According to an embodiment, the first rear cover 280 and the second rear cover 290 may be substantially symmetrical in shape with respect to the folding axis (axis A).

According to an embodiment, the sensor area 224a may be formed adjacent to a corner of the second housing 220 and to have a predetermined area. However, the placement, shape, or size of the sensor area 224a is not limited to those illustrated. For example, the sensor area 224a may be provided in a different corner of the second housing 220 or in any area between the top corner and the bottom corner. In an embodiment, components for performing various functions, embedded in the electronic device 101, may be exposed through the sensor area 224a or one or more openings in the sensor area 224a to the front surface of the electronic device 101. In an embodiment, the components may include various kinds of sensors. The sensor may include at least one of, e.g., a front-facing camera, a receiver, an illuminance sensor, a proximity sensor, or a grip sensor.

The grip sensor may be a sensor for determining the state of user contact with the electronic device 101. The grip sensor may be disposed on at least one of the front, side, or rear surface of the electronic device 101 to be able to detect the state of contacting the front surface and/or the rear surface of the electronic device 101 in a state in which the user grips the electronic device 101.

The housings 210 and 220 of the electronic device 101 are not limited to the shape and coupling shown in FIGS. 2A and 2B but may rather be implemented in other shapes or via a combination and/or coupling of other components. For example, the first housing 210 and the first rear cover 280 may be integrally formed with each other, and the second housing 220 and the second rear cover 290 may be integrally formed with each other.

According to an embodiment, the display 230 may mean a flexible display at least a portion of which may be transformed into a flat or curved surface. According to an embodiment, the display 230 may include a folding area 233, a first area (or first display area) 231 disposed on one side of the folding area 233 (e.g., the left side of the folding area 233 of FIG. 2A), and a second area (or second display area) 232 disposed on the other side of the folding area 233 (e.g., the right side of the folding area 233 of FIG. 2A).

According to an embodiment, in the unfolded status (or flat state) (e.g., the state illustrated in FIG. 2A) of the electronic device 101, the first housing 210 and the second housing 220 may be disposed so that the first area 231 and the second area 232 of the display 230 face in the same direction, while forming a designated angle, e.g., 180 degrees. For example, the surface of the first area 231 and the surface of the second area 232 of the display 230 may form an angle of 180 degrees therebetween while facing in the same direction (e.g., forward of the front surface of the electronic device 200). The folding area 233 may be coplanar with the first area 231 and the second area 232.

According to an embodiment, when the electronic device 101 is in the folded status (or folded status), the first housing 210 and the second housing 220 may be disposed to face each other. The surface of the first area 231 and the surface of the second area 232 of the display 230 may be angled at a small angle (e.g., ranging from 0 degrees to 10 degrees) therebetween while facing each other. At least a portion of the folding area 233 may be formed as a curve having a predetermined curvature.

According to an embodiment, when the electronic device 101 is in the intermediate status, the first housing 210 and the second housing 220 may be disposed at a certain angle therebetween. The surface of the first area 231 of the display 230 and the surface of the second area 232 may be disposed to form an angle which is larger than the angle in the folded status and smaller than the angle in the unfolded status. The folding area 233 may at least partially have a curved surface with a predetermined curvature and, in this case, the curvature may be smaller than that when it is in the folded status. As such, the partially folded status (e.g., flex mode or table mode) of the display 230 may mean a state in which at least a portion of the first area 231 and at least a portion of the second area 232 each are visually exposed to the outside.

According to an embodiment, an opening may be formed in at least a partial area of the housing 210 or 220 to expose the connector 203, and the connector 203 may be disposed in the opening. According to an embodiment, a header-type external connector 207 may be coupled to the connector 203 in a forward or backward direction. According to an embodiment, the external connector 207 may be connected to an external power supply device via a cable. As the connector 203 and the external connector 207 are coupled to each other, the electronic device 101 and the external power supply device may be connected. According to an embodiment, the external power supply device may be various external devices that may be connected to the electronic device 101. For example, the external power supply device is a USB on-the-go (OTG) device and may include a charger (or battery pack), a charging adapter, an audio device, a laptop computer, a computer, memory, or an antenna (e.g., digital multimedia broadcasting antenna or FM antenna). For example, the external power supply device may be a device that transfers external power to the electronic device 101, and its type may not be limited thereto.

According to an embodiment, the first rear cover 280, the second rear cover 290, the first housing 210, and the second housing 220 may form a space where various components (e.g., a printed circuit board or battery) of the electronic device 101 may be disposed. According to an embodiment, one or more components may be arranged or visually exposed on/through the rear surface of the electronic device 101. For example, the electronic device 101 may include a sub display at least partially exposed visually through the first rear area 282 of the first rear cover 280. In an embodiment, the sensor exposed through the second rear area 292 may include a rear camera.

According to an embodiment, the electronic device 101 is a foldable electronic device, and may include a plurality of batteries to supply and store power required for driving to electronic components. For example, the electronic device 101 may include a first battery 289a and a second battery 289b disposed in the first housing 210 and the second housing 220, respectively. According to an embodiment, the first battery 289a may be disposed inside the first housing 210, and the second battery 289b may be disposed inside the second housing 220.

According to an embodiment, the electronic device 101 may include various electronic components (or electrical components) disposed inside or outside the first housing 210 and the second housing 220. The various electronic components may include, e.g., a processor (e.g., the processor 120 of FIG. 1), memory (e.g., the memory 130 of FIG. 1), an input module (e.g., the input module 150 of FIG. 1), a sound output module (e.g., sound output module 155 of FIG. 1), a display 230 (e.g., the display module 160 of FIG. 1), an audio module (e.g., the audio module 170 of FIG. 1), a sensor (e.g., the sensor module 176 of FIG. 1), an interface (e.g., the interface 177 of FIG. 1), a connecting terminal (e.g., the connecting terminal 178 of FIG. 1 or the connector 203 of FIG. 2A), a haptic module (e.g., the haptic module 179 of FIG. 1), a camera module (e.g., the camera module 180 of FIG. 1), a power management module (e.g., the power management module 188 of FIG. 1), batteries 289a and 289b (e.g., the battery 189 of FIG. 1), a communication circuit (e.g., the communication module 190 of FIG. 1), a subscriber identification module (e.g., the subscriber identification module 196 of FIG. 1), or an antenna module (e.g., the antenna module 197 of FIG. 1). The electronic components may be appropriately separated and disposed in the inner or outer space of the first housing 210 and the second housing 220. At least one (e.g., the connecting terminal 178) of the components may be omitted from the electronic device 101, or one or more other components may be added in the electronic device 101. Further, some of these components may be integrated into one component.

FIG. 3A is a view illustrating a folded status of a second-type electronic device according to an embodiment. FIG. 3B is a view illustrating a state in which batteries are disposed in a second-type electronic device according to an embodiment. A difference between the first-type electronic device and the second-type electronic device is the number of housings. Although the first-type device is a device with two housings and the second-type device is a device with three housings, it should be noted that the methods described in the present disclosure may be used in devices with any number of housings.

Referring to FIGS. 3A and 3B, in an embodiment, a foldable housing 300 may include a first housing 310, a second housing 320, and a third housing 330. According to an embodiment, a display 350 may include a first display area 360 disposed on one side of a first folding axis A-A', a second display area 370 disposed between the first folding axis A-A' and a second folding axis B-B', and a third display area 380 positioned on a side opposite to the second display area 370, of the second folding axis B-B'. For example, the first display area 360 may be positioned on a first surface 311 of the first housing 310, the second display area 370 may be positioned on a third surface 321 of the second housing 320, and the third display area 380 may be positioned on a fifth surface 331 of the third housing 330. According to an embodiment, when the first housing 310 rotates about the second housing 320, the first surface 311 of the first housing 310 may be folded to face the third surface 321 of the second housing 320 (in-folding). When the second housing 320 rotates about the third housing 330, the third surface 321 of the second housing 320 may be folded to face away from the fifth surface 331 of the third housing 330 (out-folding).

According to an embodiment, as shown in FIG. 3B, the first battery 389a may be disposed inside the first housing 310, the second battery 389b may be disposed inside the second housing 320, and the third battery 389c may be disposed inside the third housing 330.

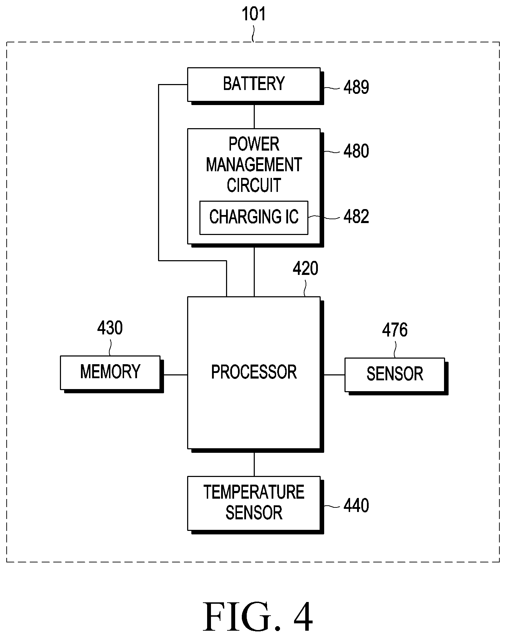

FIG. 4 is a block diagram illustrating an internal configuration of an electronic device according to an embodiment.

Referring to FIG. 4, an electronic device 101 (e.g., the electronic device 101 of FIGS. 1 to 3B) may include a plurality of batteries (e.g., the batteries 289a and 289b of FIG. 2B or the batteries 389a, 389b, and 389c of FIG. 3B) 489, memory 430 (e.g., the memory 130 of FIG. 1), or a processor 420 (e.g., the processor 120 of FIG. 1). According to an embodiment, the electronic device 101 may further include at least one sensor 476, a temperature sensor 440, and/or a power management circuit 480.

According to an embodiment, the electronic device 101 may omit at least one of the components or may add another component. The term "circuit" in the electronic device 101 in FIG. 4 denotes a unit processing at least one function or operation and be implemented in hardware, software, or a combination thereof. Although the term "circuit" is used in the electronic device 101, the term may be interchangeably used with "module," "unit," or "device."

According to an embodiment, the sensor 476 may be identical to the sensor module 176 described with reference to FIG. 1. The sensor 476 may include at least one sensor for determining the state of the user's contact to the electronic device 101. For example, the sensor 476 may include a grip sensor and, in addition to the grip sensor, may further include a gesture sensor, a gyro sensor, an acceleration sensor, a proximity sensor, a color sensor, an infrared (IR) sensor, or an illuminance sensor. The sensor 476 may generate a signal corresponding to whether the user contacts the electronic device 101 and the state of the user's contact to the electronic device 101 and transmit the signal to the processor 420.

According to an embodiment, the temperature sensor 440 may include a plurality of temperature sensors. The plurality of temperature sensors may be used to measure temperature during charging. The temperature sensor 440 may be a plurality of thermistors disposed inside the electronic device 101. The temperature sensor 440 may output a temperature value according to a resistance value that varies depending on temperature, or a temperature value according to the resistance value may be identified by the processor 420. According to an embodiment, the temperature sensor 440 may be disposed in a position corresponding to or adjacent to one of the components (e.g., a component serving as a main heat source) included in the electronic device 101. For example, the temperature sensor 440 may be disposed in an area adjacent to at least one of the components, such as the processor 420, the power management circuit 480, and/or the battery 489. According to an embodiment, each battery may have an associated temperature sensor configured to measure a temperature of said battery. According to an embodiment, the temperature sensor 440 may be further disposed adjacent to each of various other components, such as an input module (e.g., USB) and an audio module. According to an embodiment, the temperature sensor 440 may be operated under the control of the processor 420. The temperature sensor 440 may passively transfer the state corresponding to the temperature value in response to the command from the processor 420 and, in response thereto, the processor 420 may obtain the temperature associated with at least one component of the electronic device 101 from the temperature sensor 440. According to an embodiment, the temperature sensor 440 may provide the temperature value obtained in the position corresponding to at least one heat source (e.g., at least one component designated as a heat source) among the components included in the electronic device 101.

According to an embodiment, the processor 420 may obtain the temperature related to heat generation of the batteries 489 based on the temperature value obtained using the temperature sensor 440 during charging in a state in which the pause charging function is set. For example, the processor 420 may identify the temperature value (or temperature values) detected (or measured) by the temperature sensor 440 periodically or in real-time according to a designated period at the start of charging, and obtain the temperature related to heat generation of the batteries 489. According to an embodiment, the processor 420 may use the temperature values obtained while the pause charging function is active, for the purpose of determining the battery to pause charging and the battery to charge.

According to an embodiment, the electronic device 101 may be connected to an external device (e.g., charger or battery pack) through a connector (e.g., the connector 203 of FIG. 2A). When the electronic device 101 is electrically connected with the external device through the connector, the electronic device 500 may receive power from the external device.

According to an embodiment, the charging circuit of the electronic device 101 may include a power management circuit (power management IC (PMIC)) 480. According to an embodiment, the charging circuit may be a separate component from the processor 420. According to an embodiment, the power management circuit 480 (or the charger IC 482) may control the voltage of the power supplied to each component included in the electronic device 101. The power management circuit 480 may output a preset voltage. The power management circuit 480 may receive the power of the external device (e.g., a charger or battery pack) supplying external power through the connector and output a preset voltage and may charge the battery 489 electrically connected thereto. Although FIG. 4 exemplifies a case where the charger IC 482 is included in the power management circuit 480, the charger IC 482 may be implemented separately from the power management circuit 480 to supply and manage power to each of the battery 489 and the power management circuit 480.

According to an embodiment, the battery 489 may refer to a plurality of batteries as shown in FIGS. 2B and 3B. Accordingly, the power management circuit 480 may simultaneously charge the plurality of batteries 489 by outputting a preset voltage of the external power supplied through the connector to each of the plurality of batteries 489. Further, when a path through which power is supplied to the plurality of batteries 489 through the connector is separated, the processor 420 may individually charge each of the plurality of batteries 489 through the power management circuit 480. For example, by controlling the power management circuit 480, the processor 420 may pause charging of one or more batteries among the plurality of batteries 489 and may charge the remaining batteries. Further, the power management circuit 480 may individually charge each of the plurality of batteries 489 by adjusting the charging power for each of the plurality of batteries 489. Although described as 'charging power', as an example, for the description of various embodiments, 'charging power' may be used alternatively/interchangeably with any one of 'current', 'voltage', 'power', or 'impedance'.

According to an embodiment, the power management circuit 480 may charge the batteries sequentially from a battery having a higher priority among the plurality of batteries 489. For example, since the required power is different for each component disposed in the housing 210 or 220, the power consumption of the battery connected to more components would be higher, and thus the corresponding battery may be charged first. Further, when 5G communication is used, a large amount of data may be transmitted, and current consumption may be increased due to an increase in data throughput. Therefore, a battery having a low load among the batteries may be charged first, considering the execution state of an application. In an embodiment, the priority of the batteries may be preset depending on the settings by the manufacturer or user, but may be adaptively determined considering various charging contexts.

According to an embodiment, the memory 430 may be operatively connected to the processor 420 and may store various information and programs necessary to control the pause function during charging. For example, the program may include a routine for detecting connection to an external device for charging, a routine for identifying whether the pause charging function is active, a routine for identifying a plurality of conditions related to heat generation of batteries to determine a battery to pause charging and a battery to charge while the pause charging function is active, or a routine for pausing some batteries and charging the remaining batteries with power corresponding to the external device while the pause charging function is active.

According to an embodiment, the plurality of conditions related to heat generation of batteries may include a first condition for identifying the battery load by components (or elements) related to battery heat generation, a second condition for identifying battery heat generation of a threshold temperature or more, a third condition for identifying the state of the electronic device 101, such as the unfolded status, folded status, or intermediate status, or a fourth condition for identifying the usability (e.g., user contact state) of the electronic device 101 by the user.

According to an embodiment, the processor 420 may set a pause charging function for the plurality of batteries 489 according to a first input (e.g., a user input). For example, the pause charging function may be activated (or turned on) or deactivated (or turned off) through the setting menu. When the user sets the pause charging function to "on", the processor 420 may activate the pause charging function. Here, the activation of the pause charging function may indicate a state in which the function is set through the setting menu. Therefore, the activation of the pause charging function may not be a state in which the function of pausing the charging of the battery 389 is executed, but a state in which monitoring is performed before the pause charging function is executed. According to an embodiment, the pause charging function for the plurality of batteries 489 during charging may be a function in which the external power is provided to the components (or elements) of the electronic device 101 without charging the batteries 489 according to an input of the external power.

According to an embodiment, the processor 420 may control the operation of the electronic device 101 and/or the signal flow between the components of the electronic device 101, and may perform a data processing function for processing data. When the processor 420 is coupled to an external device, the processor 420 may detect an input of external power. The processor 420 may recognize this through an interrupt signal line of the connector. According to an embodiment, the processor 420 may identify a value detected through the connector, and may identify whether the electronic device is attached or detached (or disconnected) from the external device according to the detected value. Accordingly, the processor 420 may detect an input of external power, and may receive the external power as the input of external power is detected.

The processor 420 may start charging the batteries 489 in response to detecting the input of the external power (or in response to receiving the external power).

According to an embodiment, when the pause charging function is active, the processor 420 may pause charging of all the batteries 489 before starting charging of some of the batteries 489 and pausing charging of the remaining batteries. For example, before identifying the plurality of conditions related to heat generation of the batteries to determine the battery to pause charging and the battery to charge, charging of all the batteries 489 may be paused, and when at least one of the plurality of conditions is met, pause of charging of some of the batteries 489 may be maintained, and the charging of the remaining batteries may be performed (or initiated). Here, the condition for executing the pause charging function for all of the batteries 489 may assume a case where the remaining battery capacity is a threshold capacity (e.g., 20%) or more in a state in which an input of external power is detected, and an application consuming power of a threshold or more is executed.

According to an embodiment, when the pause charging function is active, the processor 420 may identify whether at least one of a plurality of designated conditions related to heat generation of batteries is met before executing the pause charging function for pausing charging of all of the batteries 489 and, when at least one condition is met, pause charging of some of the batteries 489 and perform charging of the remaining batteries.

**In** an embodiment, to be able to resume charging when a specific condition is met even in a context where charging should be paused while the pause charging function is active, the processor 420 may continue or pause charging depending on the type of the application being executed while charging is performed using external power. For example, the processor 420 may identify the context where heat generation is caused in relation to batteries to determine whether to continue or pause charging of at least one of the batteries when an application consuming much power is executed during charging, or when charging using external power starts while the application consuming much power is being executed. The processor 420 may determine whether to pause or continue charging of at least one of the plurality of batteries, based on a context in which heat is generated, i.e., context information associated with the batteries.

In an embodiment, a battery to pause charging may be selected (or determined) based on various contexts (or conditions) of the battery predicted to increase in temperature during charging, such as a temperature associated with the battery, a housing structure in which the batteries are mounted, contact between the batteries, and a gripped state of the user detected by the grip sensor, and a battery selection criterion may be determined based on each of the contexts or a combination of the contexts.

As described above, when the pause charging function is active, the processor 420 may determine whether to execute the pause charging function in response to detecting an input of external power. Here, detecting the input of the external power should be understood as detecting the connection through the terminal of the connector of the electronic device 101 as the user plugs in the charger for charging.

After pausing the charging of all the batteries 489, the processor 420 may determine the battery to pause charging and the battery to charge, and then control to continue pausing charging for some batteries and release the pause of charging for the remaining batteries to perform charging. Further, before executing the pause charging function, the processor 420 may determine the battery to pause charging and the battery to charge and then control to stop charging some batteries and perform charging of the remaining batteries. In an embodiment, the operation of identifying (or monitoring) the target battery for identifying whether there is a battery to pause charging or a battery capable of charging in the state in which the pause charging function is active may be performed in the state in which charging of all batteries is paused due to the execution of the pause charging function, or may be performed before charging is started. However, the operation may be performed once the charging is started, and the operation of monitoring the target battery periodically or according to a designated condition may be performed even while the charging is performed.

In an embodiment, the conditions for executing the pause charging function may include, first, a state in which an input of external power is detected (or a state in which external power is being received), second, a state in which the remaining capacity of the battery is equal to or larger than a threshold capacity (e.g., 20%), and third, a state in which an application consuming power equal to or larger than a threshold value is executed. When the above conditions are simultaneously met, the pause charging function may be executed.

For example, in order to determine whether to execute the pause charging function, the processor 420 may identify whether an application consuming power larger than or equal to the threshold value is being executed. The application consuming power larger than or equal to the threshold value may be predetermined based on average power consumed for each application, and may be determined by identifying whether power larger than or equal to the threshold value is consumed when the application is executed. For example, when a first application having low current consumption is being executed (or is executed), the processor 420 may continue charging the batteries 489. On the other hand, when a second application having high current consumption, such as a game application, is being executed (or is executed), the processor 420 may determine whether to pause charging of the batteries 489. Here, the second application may be an application that consumes more power than the amount of power consumed by the first application. For example, the second application that consumes power larger than or equal to the threshold value may be an application that consumes a large amount of current due to the use of large amounts of data, such as a game application and a video application, and the type of the application may not be limited thereto. For example, because the amount of data to be processed may vary according to various operation contexts such as video streaming and cloud document operation during charging, the types of applications to which the pause charging function is applicable may vary.

When the charging of the batteries using the external power is identified while the pause charging function is active, the processor 420 may identify whether the remaining capacity of the battery is larger than or equal to a threshold capacity (e.g., 20%) while an application having high current consumption is being executed to determine whether to execute the pause charging function. When the remaining capacity is less than the threshold capacity, even if the pause charging function is active, the processor 420 may not perform the operation of pausing the charging of the plurality of batteries 489. On the other hand, when the remaining capacity is larger than or equal to the threshold capacity, the processor 420 may execute the pause charging function to pause charging of all of the batteries 489 and then identify whether there is a battery to pause charging or a battery capable of charging among the batteries 489. Further, the processor 420 may identify whether there is a battery to pause charging or a battery to be chargeable among the batteries 489 before executing the pause charging function, i.e., before performing an operation of pausing charging of all of the batteries 489. Here, the battery to be chargeable may be a battery that is not subject to heat generation limitation during charging, and the battery to pause charging may be a battery that is subject to heat generation limitation during charging.

In an embodiment, the processor may determine the battery not subject to heat generation limitation using a plurality of conditions related to the heat generation of batteries so as to be able to charge the chargeable battery among the batteries 489 while or before the pause charging function is executed. Here, the processor 420 may identify whether at least one of the plurality of conditions related to the heat generation of the batteries is met by identifying context information associated with the batteries and may thus determine the battery not subject to heat generation limitation.

According to an embodiment, when the pause charging function is active, the processor 420 may determine the battery not subject to heat generation limitation from the charging start time and charge the battery not subject to heat generation limitation.

In an embodiment, the first condition among the plurality of conditions may be to identify a battery load caused by components (or elements) related to battery heat generation. For example, the type and number of components disposed in each of the housings (e.g., the housings 210 and 220 of FIG. 2B and the housings 310, 320, and 330 of FIG. 3A) may be different. Accordingly, the processor 420 may identify the housing in which more components are disposed based on the first condition for identifying the housing in which more components are disposed among the housings, and if the first condition is met, the processor 420 may pause charging of the battery disposed in the housing in which more components are disposed.

Further, the battery load caused by the components related to battery heat generation may be varied not only by the type and number of components disposed in the housing, but also by the type and number of components connected to the battery in the housing. The processor 420 may identify a battery to which components consuming more power among the batteries are connected, and since heat may be generated due to power consumption by the components, pause charging of the identified battery. Alternately, since a battery connected with a component consuming more power, such as an AP, among the batteries may require more power to operate the AP, unless there is heat generation of the threshold or more, perform charging of the battery connected with the AP and pause charging of the remaining batteries.

For example, Table 1 may be referred to identify battery loads according to components disposed in the housing.

**[Table 1]**

| Battery mounting surface | 30% load | 50% load | 70% load | 80% load |
|---|---|---|---|---|
| SIM slot | 5 | 20 | 30 | 40 |
| application processor (AP) | 15 | 50 | 70 | 90 |
| NFC | 0 | 0 | 10 | 15 |

Referring to Table 1, the load on the first battery 289a due to the components disposed in the first housing 210 among the housings (e.g., the housings 210 and 220 of FIG. 2B or the housings 310, 320, and 330 of FIG. 3A) is described. It is shown that a load of 30% is applied to the first battery 289a due to the AP having a load value of 15, the SIM slot having a load value of 5, and the NFC having a load value of 0 (e.g., not driven) on the surface (e.g., the first housing 210) on which the first battery 289a is disposed. On the other hand, the load on the second battery 289b due to the components disposed in the second housing 220 is described. A load of 50% may be applied to the second battery 289b due to the AP having a load value of 50, the SIM slot having a load value of 20, and the NFC having a load value of 0 (e.g., not driven).

If a load of 50% is applied to the second battery 289b and a load of 30% is applied to the first battery 289a, the processor 420 may select the first battery 289a having a lower load, i.e., the load of 30%, as a battery not subject to heat generation limitation, and may control to charge the first battery 289a. As described above, the processor 420 may calculate a load on the battery considering an expected load for each component, and may determine a battery having a lower load among the batteries 489 according to the calculated load. Here, the numbers described in Table 1 are merely exemplary numbers, and even if an AP is disposed in each of the first housing 210 and the second housing 220, the types of the APs may be different, and thus the loads due to the AP may also be different, and thus the load values due to the components may not be limited thereto. Thus, the numerical values in Table 1 are merely for illustrative purposes, and various modifications or variations thereof may be possible.

As described above, the battery adjacent (or connected) to the AP which is a major heat generating component may generate more heat due to the heat generated from the AP. Accordingly, the battery adjacent to the AP may be controlled to be preferentially paused from charging, and the remaining batteries may be controlled to be charged. Meanwhile, when the electronic device 101 is operating in power saving mode, the electronic device 101 may control to first consume the power of the battery not adjacent to the AP, increasing battery efficiency. Here, in a housing having a sub device, e.g., a cooler, to reduce heat generation among the components, control may be performed to first charge the battery disposed in the housing.

Meanwhile, although charging is limited for some batteries among the batteries, the processor 420 may monitor the heat generation context periodically or according to a designated condition and, when heat generation of the threshold temperature or more is detected for all of the batteries 489, pause charging the remaining batteries which are being charged.

In an embodiment, the second condition among the plurality of conditions may be to identify battery heat generation larger than or equal to a threshold temperature value. For example, the processor 420 may periodically measure the temperature of components (or elements) using the plurality of temperature sensors 440, and the measurement period may be adjustable. The processor 420 may identify the battery heat generation of the threshold temperature value or more based on the second condition for identifying the battery heat generation of the threshold temperature value or more to monitor whether the batteries 489 generate heat by measuring the temperature for the components and, when the second condition is met, pause charging for the battery which causes heat generation of the threshold temperature value or more among the batteries 489. Here, the temperature measurement for the components may include a temperature measurement for the batteries 489.

Further, the processor 420 may monitor whether the batteries 489 generate heat by measuring the temperature of the components, and may perform charging from a battery having a lower temperature among the batteries 489 having a temperature less than the threshold temperature value.

In an embodiment, the third condition among the plurality of conditions may be identifying the state (or pose) of the electronic device 101, such as the unfolded status, the folded status, or the intermediate status. For example, when the electronic device 101 includes a first housing 210 and a second housing 220 rotatably coupled to each other as illustrated in FIG. 2B, a first battery 289a may be disposed in the first housing, and a second battery 289b may be disposed in the second housing. The electronic device 101 may identify whether the state of the first housing 210 and the second housing 220 is a folded status in which they are disposed to face each other, an unfolded status, or an intermediate status in which they are partially folded at a predetermined angle. When the third condition is met by identifying the state of the first housing 210 and the second housing 220, the processor 420 may pause charging of the battery corresponding to the identified state among the batteries 489 and may perform charging of the remaining batteries.

For example, in response to identifying that the state of the first housing 210 and the second housing 220 is the folded status, the processor 420 may pause charging of the first battery 289a and the second battery 289b. In the folded status as described above, since the first battery 289a and the second battery 289b are very close to each other, when heat is generated in any one battery, heat may be transferred to the other battery, and thus charging of both the first battery 289a and the second battery 289b may be paused.

For example, in response to identifying that the state of the first housing 210 and the state of the second housing 220 is the partially folded intermediate status, the processor 420 may identify the housing that is not in contact with an external object, of the first housing 210 and the second housing 220. Here, the external object may represent a contact surface (e.g., a floor or a table) that at least one of the first housing 210 and the second housing 220 contacts. In the partially folded intermediate status, e.g., in a state (e.g., tent mode) in which the two housings 210 and 220 are mounted in a tent shape with the side surfaces thereof in contact with the table, it may be regarded as the two housings 210 and 220 both contacting. In this case, the processor 420 may additionally identify the mounting state (e.g., tent mode) of the two housings 210 and 220 rather than pausing charging of each of the batteries in the two housings 210 and 220. Since the mounting state corresponds to a state in which the two housings 210 and 220 do not contact each other, the processor 420 may perform charging of each of the batteries in the two housings 210 and 220. Further, when one of the two housings 210 and 220 is placed on the table in the partially folded intermediate status, the processor 420 may identify whether the surface contacting the external object is the surface where the battery is disposed to pause or perform charging of some batteries.

Accordingly, the processor 420 may identify whether the fourth condition is met by identifying the housing not in contact with the external object (or contact surface) of the first housing 210 and the second housing 220 and identifying at least one or a combination of the mounting state (e.g., tent mode) of the two housings 210 and 220 and the surface where the battery in contact with the external object is disposed in the mounting state of the two housings 210 and 220. For example, if the fourth condition is met as the processor 420 identifies the housing not in contact with the external object (or contact surface), the processor 420 may pause charging of the battery disposed in the housing in contact with the external object and perform charging of the battery disposed in the housing not in contact with the external object.

In an embodiment, the fourth condition among the plurality of conditions may be to identify the usability (e.g., a user contact state) of the electronic device 101 of the user. For example, when the user is using a game application while gripping the electronic device 101, a low-temperature burn may occur due to skin contact. Therefore, to reduce the degree of heat generation felt by the user, the electronic device 101 may control the heat generation of the portion contacted by the user's hand. For example, the processor 420 may identify whether the fourth condition is met by identifying a housing that is not gripped by the user using the sensor (e.g., a grip sensor) 476 between the first housing 210 and the second housing 220. The processor 420 may control to charge the battery disposed in the housing not gripped by the user of the first housing 210 and the second housing 220 and pause charging of the battery disposed in the housing gripped by the user to reduce heat generation.

Meanwhile, in the above-described example, when the pause charging function is activated in the electronic device 101 including the plurality of batteries 489, a battery not subject to charging limitation is detected considering the battery load due to the structure in which components are disposed when the pause charging function is activated, heat generation value, and the state (or pose) or user contact state of the electronic device 101, and the corresponding battery is charged. However, a method for detecting a battery not subject to charging limitation may not be limited thereto. For example, when a priority is assigned to each of the batteries 489, the battery according to the priority may be charged first without a process for finding the battery not subject to heat generation limitation. As such, methods for determining a battery to be charged are not to be limited to cases in which the pause charging function is active, but may also be performed while the pause charging function is not active, i.e., a battery to be charged may be varied, even if the pause charging function is not active. For example, the determination of which battery to be charged may depend on the actual state of charge of the batteries and/or battery temperature, regardless of activity of the pause charging function.

In an embodiment, the processor 420 may identify whether each condition (e.g., the first condition to the fourth condition) is met to identify whether at least one of the plurality of the above-described conditions is met, and may also identify whether different combinations or all combinations of the conditions are met. For example, the processor 420 may identify (or predict or infer) a context where heat generation is caused in relation to the batteries. The processor 420 may identify context information associated with the batteries, based on at least one of the temperature associated with the battery, the housing structure in which the batteries are mounted, contact between the batteries, and the gripping state of the user detected by the grip sensor.

The processor 420 may identify the above-described conditions and identify whether there is a battery to pause charging or a battery to be chargeable based on satisfaction of at least one condition.

In an embodiment, when there is no battery to pause charging, e.g., when none of the two or more batteries are subject to heat generation limitation, the processor 420 may charge all of the batteries 489 through the power management circuit 480 even when the pause charging function is active. For example, when charging of all of the batteries 489 is started in response to detecting an input of external power, the operation of charging all of the batteries 489 may continue.

In an embodiment, when there are some batteries to pause charging, e.g., when one or more of the batteries 489 are batteries subject to heat generation limitation, the processor 420 may pause charging of one or more of the batteries 489 through the power management circuit 480, and may perform charging of the remaining batteries of the batteries 489.

In an embodiment, when there is a battery to pause charging, e.g., when all of the batteries 489 are subject to heat generation limitation, the processor 420 may pause charging of all of the batteries 489 through the power management circuit 480.

According to an embodiment, an electronic device 101 may comprise a plurality of batteries 289a, 289b, 389a, 389b, 389c, 489, at least one processor 120, 420, and memory 130, 430 storing instructions. According to an embodiment, the instructions may be configured to, when executed by the at least one processor, enable the electronic device to identify that a plurality of batteries are being charged using external power. According to an embodiment, the instructions may be configured to enable the electronic device to identify an application being executed while the plurality of batteries are being charged using the external power.

According to an embodiment, the instructions may be configured to enable the electronic device to, in case that the application being executed corresponds to a first application, continue charging the plurality of batteries using the external power.

According to an embodiment, the instructions may be configured to enable the electronic device to, in case that the application being executed corresponds to a second application, determine whether to pause charging all of the plurality of batteries, or to or continue charging all of the plurality of batteries, or to pause charging at least one of the plurality of batteries, while continuing charging a remaining battery of the plurality of batteries, based on context information associated with the plurality of batteries.

According to an embodiment, the instructions may be configured to enable the electronic device to, if it is determined to pause charging at least one of the plurality of batteries, while continuing charging a remaining battery of the plurality of batteries based on the context information associated with the plurality of batteries, control to pause charging of the at least one battery of the plurality of batteries and perform charging of the remaining battery of the plurality of batteries using the external power based on context information associated with the plurality of batteries.

According to an embodiment, the second application may consume an amount of electrical power greater than an amount of electrical power consumed by the first application.

According to an embodiment, in the electronic device, wherein the context information associated with the plurality of batteries includes at least one of temperature information associated with each of the plurality of batteries detected by a respective plurality of temperature sensors (440) of the electronic device, and the instructions may be configured to enable the electronic device to detect temperatures associated with the plurality of batteries using a plurality of temperature sensors disposed respectively in different positions of the electronic device and, based on the detected temperatures, pause the charging of a battery whose temperature is higher than a threshold temperature and perform charging of a battery whose temperature is lower than the threshold temperature, among the plurality of batteries.

According to an embodiment, the electronic device may further comprise a first housing 210 and a second housing 220 rotatably coupled to each other. A first battery 289a may be disposed in the first housing, and a second battery 289b may be disposed in the second housing. The instructions may be configured to enable the electronic device to identify whether a state of the first housing and the second housing is a folded state in which the first housing and the second housing are disposed to face each other, an unfolded state, or an intermediate state in which the first housing and the second housing are partially folded, and based on identifying the state of the first housing and the second housing, identify whether the plurality of batteries are arranged adjacent to each other.

According to an embodiment, the instructions may be configured to enable the electronic device, to in response to identifying that the status of the first housing and the second housing is the folded state, pause charging of the first and second batteries.

According to an embodiment, the instructions may be configured to enable the electronic device to, in response to identifying that the state of the first housing and the second housing is the intermediate state or the unfolded state, identify which of the first housing and the second housing is not in contact with an external object and pause charging of a battery disposed in one of the first housing and the second housing, which is in contact with the external object and perform charging of a battery disposed in the other one of the first housing and the second housing, which is not in contact with the external object.

According to an embodiment, the electronic device may further comprise a grip sensor 476, wherein the context information associated with the plurality of batteries includes information about a state in which the electronic device is gripped by the user, which is detected by the grip sensor (476) of the electronic device. The instructions may be configured to enable the electronic device to identify the information about the state in which the electronic device is gripped by the user as detected by the grip sensor of the electronic device by identifying which part of the electronic device is gripped by the user, using the grip sensor, and control to pause charging of a battery disposed proximate to a part of the electronic device gripped by the user, and perform charging of a battery distal to a part of the electronic device gripped by the user.

According to an embodiment, the electronic device may further comprise further comprising a plurality of housings, wherein the plurality of batteries are disposed in different housings, and the instructions may be configured to, when executed by the at least one processor, enable the electronic device to, pause charging of a battery disposed in a housing, among the plurality of housings, in which more components are arranged and perform charging of a battery disposed another housing, among the plurality of housings, in which fewer components are arranged.

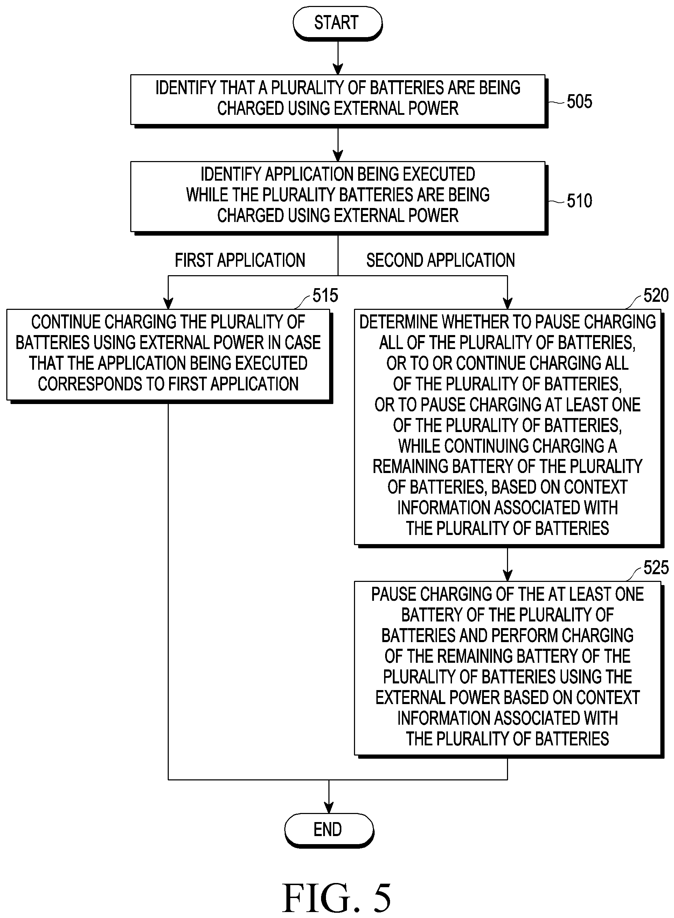

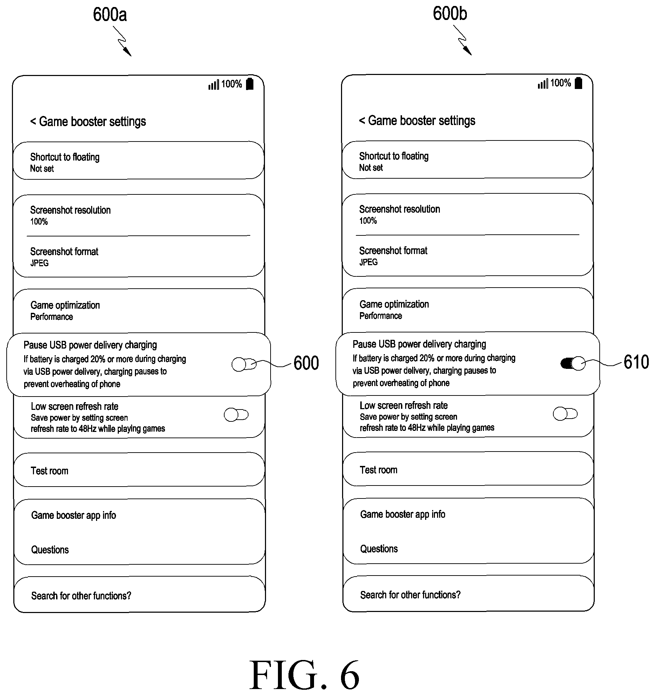

FIG. 5 is a flowchart illustrating operations of an electronic device for performing heat generation control during charging according to an embodiment. Referring to FIG. 5, the operation method may include operations 505 to 525. Each operation of the operation method of FIG. 5 may be performed by at least one of an electronic device (e.g., the electronic device 101 of FIG. 1 or the electronic device 101 of FIGS. 2A to 4) or at least one processor (e.g., at least one of the processor 120 of FIG. 1 or the processor 420 of FIG. 4) of the electronic device. In an embodiment, at least one of operations 505 to 525 may be omitted or changed in order or may add other operations. Hereinafter, a description will be made with reference to FIGS. 6 to 11 to help understanding of the description of FIG. 5.

According to an embodiment, in operation 505, the electronic device 101 may identify that the plurality of batteries 289a, 289b, 389a, 389b, 389c, and 489 are being charged using the external power. For example, the electronic device 101 may detect that charging using external power starts in a state in which the pause charging function is set. In an embodiment, when the pause charging function is not set, e.g., when the pause charging function is inactive, a screen for activating the pause charging function may be displayed in response to detecting that charging using external power starts. Further, the pause charging function may be activated in advance through the setting menu. Here, the state in which the pause charging function is active may indicate a state in which battery charging is operating in a mode for limiting battery charging, rather than a state in which battery charging is actually limited. Alternatively, the operations of Figure 5 may be carried out regardless of any pause charging function. For example, a pause charging function may be absent from the device, and the operations of Figure 5 can be carried out the same way.

According to an embodiment, in operation 510, the electronic device 101 may identify an application executed while the plurality of batteries are being charged using the external power.

According to an embodiment, in operation 515, in case that the application being executed corresponds to a first application, the electronic device 101 may continue charging the plurality of batteries using the external power.

According to an embodiment, in operation 520, in case that the application being executed corresponds a second application, the electronic device 101 may determine whether to pause charging all of the plurality of batteries, or to or continue charging all of the plurality of batteries, or to pause charging at least one of the plurality of batteries, while continuing charging a remaining battery of the plurality of batteries, based on context information associated with the plurality of batteries. The second application may consume more power than the amount of power consumed by the first application.

According to an embodiment, in operation 525, if it is determined to pause charging at least one of the plurality of batteries, while continuing charging a remaining battery, the electronic device 101 may control to pause charging of the at least one battery of the plurality of batteries and perform charging of the remaining battery of the plurality of batteries using the external power based on context information associated with the plurality of batteries.

For example, the electronic device 101 may identify whether the second application consuming power larger than or equal to the threshold value is being executed. In response to identifying that the second application is running, the electronic device 101 may identify context information associated with batteries. The electronic device 101 may identify whether there is a battery to pause charging among the batteries, based on context information associated with the batteries. The electronic device 101 may perform charging on the batteries in response to identifying that there is no battery to pause charging.

According to an embodiment, the context information associated with the plurality of batteries may include at least one of temperature information associated with the plurality of batteries detected by a plurality of temperature sensors of the electronic device, information about a state in which the plurality of batteries are arranged adjacent to each other, information about components arranged in a plurality of housings of the electronic device, or information about a state in which the electronic device is gripped by the user, which is detected by the grip sensor of the electronic device.

According to an embodiment, the electronic device 101 may detect the temperature associated with the batteries using a plurality of temperature sensors 440 disposed at different positions of the electronic device. For example, each battery may be associated with at least one temperature sensor among the plurality of temperature sensors 440. Based on the detected temperature, the electronic device 101 may control to pause charging of a battery higher than a threshold temperature among the batteries and charge the battery lower than the threshold temperature.

According to an embodiment, the electronic device 101 may identify whether the state of the first housing 210 and the second housing 220 is a folded state where they are disposed to face each other, an unfolded state, or an intermediate state in which they are partially folded. Here, the first housing 210 and the second housing 220 may be rotatably coupled to each other, a first battery 289a may be disposed in the first housing, and a second battery 289b may be disposed in the second housing. Based on identifying the state of the first housing and the second housing, the electronic device 101 may identify whether the plurality of batteries are disposed adjacent to each other.

According to an embodiment, in response to identifying that the state of the first housing and the second housing is the folded state, the electronic device 101 may control to pause charging of the first and second batteries.

According to an embodiment, the pause charging function for the plurality of batteries 289a, 289b, 389a, 389b, 389c, and 489 may be set according to a first input (e.g., a user input). The pause charging function is described with reference to FIG. 6. FIG. 6 is a view illustrating an example screen for a pause charging function according to an embodiment.

Referring to FIG. 6, when the user executes a game application after connecting an external power supply device such as a charger for charging, the electronic device 101 may display a screen for a pause charging function as in 600a. Further, the screen for the pause charging function may be entered through the setting menu as in 600a. By selecting the indicator 600, the user may change the inactive (or off) state of the pause charging function for the battery to the indicator 610 indicating the active (or on) state of the pause charging function as in 600b.

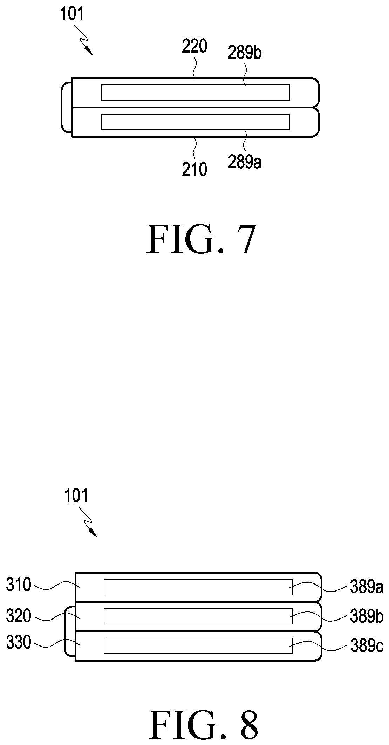

The state (or pose) of the electronic device 101 corresponding to the folded status is described with reference to FIGS. 7 and 8. FIG. 7 is a side view illustrating a folded status of a first-type electronic device according to an embodiment. FIG. 8 is a side view illustrating a folded status of a second-type electronic device according to an embodiment. Here, the first-type electronic device 101 of FIG. 7 may correspond to the electronic device 101 of FIGS. 2A and 2B, and the second-type electronic device 101 of FIG. 8 may correspond to the electronic device 101 of FIGS. 3A and 3B.

For example, as illustrated in FIG. 7, when the state of the first housing 210 and the second housing 220 is the folded state, the batteries 289a and 289b in the respective housings 210 and 220 may also be in a state of being adjacent and close to each other. Further, as illustrated in FIG. 8, even when the first housing 310 to the third housing 330 is the folded state, the batteries 389a, 389b, and 389c in the respective housings 310, 320, and 330 may also be in a state of being adjacent and close to each other. Accordingly, even when heat generation occurs only in any one housing, e.g., the first battery 289a in the first housing 210, the heat of the first battery 289a may be transferred to the second battery 289b of the second housing 220. Accordingly, when the state of the electronic device 101 corresponds to the folded status, the electronic device 101 may pause charging of all batteries.

According to an embodiment, in response to identifying that the state of the first housing and the state of the second housing is the partially folded intermediate state or the unfolded state, the electronic device 101 may identify a housing not in contact with an external object of the first housing and the second housing. The electronic device 101 may control to pause charging of the battery disposed in the housing in contact with the external object and charge the battery disposed in the housing not in contact with the external object.

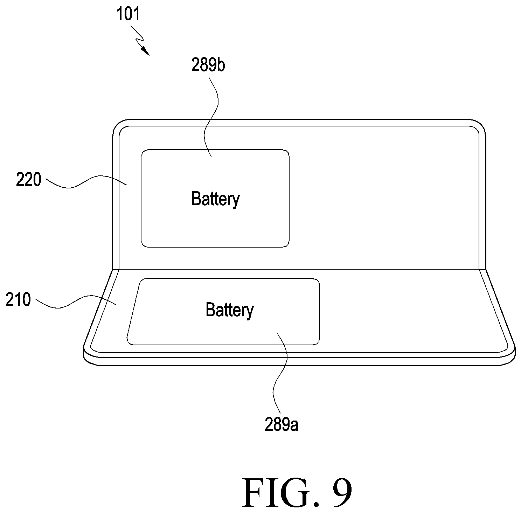

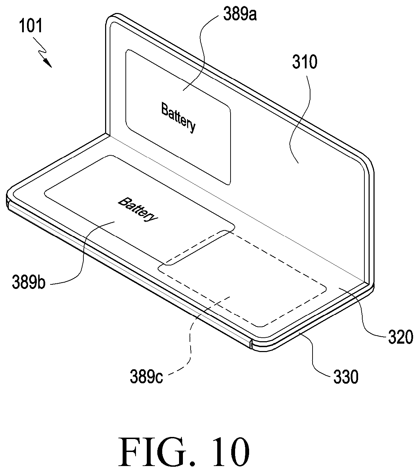

The state (or pose) of the electronic device 101 corresponding to the partially folded intermediate status is described with reference to FIGS. 9 and 10. FIG. 9 is a side view illustrating a partially folded status of a first-type electronic device according to an embodiment. FIG. 10 is a side view illustrating a partially folded status of a second-type electronic device according to an embodiment.

For example, referring to FIG. 9, the electronic device 101 may have a state in which the second housing 220 is in a state of standing on the contact surface with the first housing 210 in contact with the contact surface (or external object) (e.g., a floor or a table) as illustrated in FIG. 9. When at least a portion of the flexible display (e.g., the flexible display 230 of FIG. 2A) is in the folded status, the electronic device 101 may be placed in contact with the contact surface such as a desk, a table, or a shelf according to the mounting state (or pose), and the contact surface may be referred to as an external object. In the partially folded intermediate status, any one housing comes into contact with the external object, and thus the battery disposed in the housing in contact with the external object may be more likely to generate heat than the battery disposed in the housing not in contact with the external object.

Further, as illustrated in FIG. 10, since in the partially folded status of the electronic device 101, the first housing 310 is in a state not contacting the external object, and in the state where the third housing 330 contacts the external object, the second housing 320 contacts the third housing 330, the electronic device 101 may first charge only the battery 389a disposed in the first housing 310. In contrast, the electronic device 101 may pause charging of the batteries 389b and 389c disposed in the second housing 320 and the third housing 330.

As described above, the electronic device 101 may pause charging of the battery disposed in the housing contacting the external object, and perform charging of the battery disposed in the housing not contacting the external object.

Meanwhile, according to an embodiment, when first charging the first battery 289a in the first housing 210 of FIG. 9 while pausing charging of the remaining batteries, e.g., the second battery 289b in the second housing 220, although charging is performed in a state in which the total capacity of the batteries 289a and 289b is 20% (10%+ 10%), only the first battery 289a is charged to the maximum, so that the total battery capacity may be 60% (50%+10%). Further, when the first battery 289a is charged to the maximum in a state in which the total capacity of the batteries 289a and 289b is 50% (25%+25%), the total battery capacity may be 75% (50%+25%). In this case, the electronic device 101 may control to first consume power of the first battery 289a being charged, thereby increasing battery efficiency.

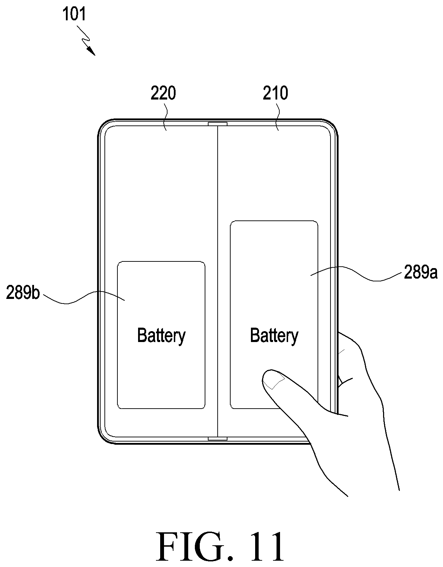

According to an embodiment, the electronic device 101 may identify a housing that is not gripped by the user of the first and second housings using a grip sensor. The electronic device 101 may charge a battery disposed in a housing that is not gripped by the user of the first and second housings. FIG. 11 is a view illustrating a state in which a first-type electronic device is gripped according to an embodiment.

As illustrated in FIG. 11, the electronic device 101 may identify which housing is contacted among the housings using a grip sensor disposed on at least one surface among the front surface, side surface, or rear surface of the electronic device 101 so that the user may detect the state of contacting the front surface and/or rear surface while gripping the electronic device 101. When the user uses the electronic device 101 while gripping the electronic device 101, heat may be generated due to contact by the user's hand. Accordingly, as illustrated in FIG. 11, the electronic device 101 may identify information about the state in which the electronic device is gripped by the user by identifying the housing not gripped by the user using a sensor (e.g., grip sensor) 476 of the first housing 210 and the second housing 220. The electronic device 101 may control to pause charging of the battery (e.g., the battery 289a of FIG. 11) disposed in the housing gripped by the user, of the first and second housings, and charge the battery (e.g., the battery 289b of FIG. 11) disposed in the housing not gripped by the user.

According to an embodiment, the electronic device 101 may identify the information about components arranged in the plurality of housings of the electronic device by identifying a housing among the first housing and the second housing, which has more components arranged therein. The electronic device 101 may, based on identifying the housing in which more components are arranged, control to pause charging of a battery disposed in the housing in which the more components are arranged and perform charging of a battery disposed in the housing, among the first housing and the second housing, in which fewer components are arranged.

According to an embodiment, the electronic device 101 may ensure adaptive battery charging depending on the heat generation context related to the battery when a charger is connected for charging while the pause charging function is active.

In an embodiment, during charging in an electronic device 101 including two or more batteries, a battery for which heat generation is to be limited pauses charging while a battery for which heat generation is not limited is charged, so that a charging function optimized for the user's intent to charge the battery itself may be provided. Accordingly, it is possible to ensure both seamless operation performance and stable battery charging by minimizing battery charging limitations due to heat generation.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

According to an embodiment, in a storage medium storing at least one computer-readable instruction, the at least one instruction may enable an electronic device 101 comprising a plurality of batteries to, when executed by at least one processor 120 or 420 of the electronic device, perform at least one operation. The at least one operation may comprise identifying that the plurality of batteries 289a, 289b, 389a, 389b, 389c, and 489 are being charged using external power. According to an embodiment, the at least one operation may comprise identifying an application being executed while the plurality of batteries are being charged using the external power.

According to an embodiment, the at least one operation may comprise, in case that the application being executed corresponds to a first application, continuing charging the plurality of batteries using the external power.

According to an embodiment, the at least one operation may comprise, in case that the application being executed corresponds to a second application, determining whether to pause charging all of the plurality of batteries, or to or continue charging all of the plurality of batteries, or to pause charging at least one of the plurality of batteries, while continuing charging a remaining battery of the plurality of batteries, based on context information associated with the plurality of batteries.

According to an embodiment, the at least one operation may comprise, if it is determined to pause charging at least one of the plurality of batteries, while continuing charging a remaining battery based on the context information associated with the plurality of batteries, controlling to pause charging of one battery of the plurality of batteries and perform charging of a remaining battery of the plurality of batteries using the external power based on the context information associated with the plurality of batteries.

## Claims

1. An electronic device (101) comprising:
a plurality of batteries (289a, 289b, 389a, 389b, 389c, 489);
at least one processor (120, 420); and
memory (130, 430) storing instructions that, when executed by the at least one processor, cause the electronic device to:
identify that the plurality of batteries are being charged using external power,
while the plurality of batteries are being charged using the external power, identify an application being executed,
in case that the application being executed corresponds to a first application, control to continue charging the plurality of batteries using the external power, and
in case that the application being executed corresponds to a second application:
determine whether to pause charging all of the plurality of batteries, or to or continue charging all of the plurality of batteries, or to pause charging at least one of the plurality of batteries, while continuing charging a remaining battery of the plurality of batteries, based on context information associated with the plurality of batteries, and
if it is determined to pause charging at least one of the plurality of batteries, while continuing charging a remaining battery of the plurality of batteries based on the context information associated with the plurality of batteries, control to pause charging of the at least one battery of the plurality of batteries and perform charging of the remaining battery of the plurality of batteries using the external power based on context information associated with the plurality of batteries.

2. The electronic device of claim 1, wherein the second application consumes an amount of electrical power greater than an amount of electrical power consumed by the first application.

3. The electronic device of claim 1 or 2, wherein the context information associated with the plurality of batteries includes at least one of temperature information associated with each of the plurality of batteries detected by a respective plurality of temperature sensors (440) of the electronic device, and wherein the instructions are further configured to cause the electronic device to:
detect temperatures associated with the plurality of batteries using the plurality of temperature sensors disposed respectively in different positions of the electronic device, and
based on the detected temperatures, control to pause the charging of a battery whose temperature is higher than a threshold temperature and perform charging of a battery whose temperature is lower than the threshold temperature, among the plurality of batteries.

4. The electronic device of any one of claims 1 to 3, further comprising a first housing (210) and a second housing (220) rotatably coupled to each other, wherein a first battery (289a) is disposed in the first housing, and a second battery (289b) is disposed in the second housing,
wherein the instructions are further configured to cause the electronic device to:
identify whether a state of the first housing and the second housing is a folded state in which the first housing and the second housing are disposed to face each other, an unfolded state, or an intermediate state in which the first housing and the second housing are partially folded, and
based on identifying the state of the first housing and the second housing, identify whether the plurality of batteries are arranged adjacent to each other.

5. The electronic device of claim 4, wherein the instructions are further configured to cause the electronic device to:
in response to identifying that the status of the first housing and the second housing is the folded state, control to pause charging of the first and second batteries.

6. The electronic device of claims 4 or 5, wherein the instructions are further configured to cause the electronic device to:
in response to identifying that the state of the first housing and the second housing is the intermediate state or the unfolded state, identify which of the first housing and the second housing is not in contact with an external object, and
control to pause charging of a battery disposed in one of the first housing and the second housing, which is in contact with the external object and perform charging of a battery disposed in the other one of the first housing and the second housing, which is not in contact with the external object.

7. The electronic device of any one of claims 1 to 6, further comprising a grip sensor (476),
wherein the context information associated with the plurality of batteries includes information about a state in which the electronic device is gripped by the user, which is detected by the grip sensor (476) of the electronic device,
wherein the instructions are further configured to cause the electronic device to:
identify the information about the state in which the electronic device is gripped by the user as detected by the grip sensor of the electronic device by identifying which part of the electronic device is gripped by the user, using the grip sensor, and
control to pause charging of a battery disposed proximate to a part of the electronic device gripped by the user, and perform charging of a battery distal to a part of the electronic device gripped by the user.

8. The electronic device of any one of claims 1 to 7, further comprising a plurality of housings, wherein the plurality of batteries are disposed in different housings, and wherein the instructions are further configured to cause the electronic device to:
control to pause charging of a battery disposed in a housing, among the plurality of housings, in which more components are arranged and perform charging of a battery disposed another housing, among the plurality of housings, in which fewer components are arranged.

9. A method for performing heat generation control during charging by an electronic device (101) comprising a plurality of batteries, the method comprising:
identifying that the plurality of batteries (289a, 289b, 389a, 389b, 389c, 489) are being charged using external power;
identifying an application being executed while the plurality of batteries are being charged using the external power; and
in case that the application being executed corresponds to a first application, continuing charging the plurality of batteries using the external power;
in case that the application being executed corresponds to a second application:
determining whether to pause charging all of the plurality of batteries, or to or continue charging all of the plurality of batteries, or to pause charging at least one of the plurality of batteries, while continuing charging a remaining battery of the plurality of batteries, based on context information associated with the plurality of batteries, and
if it is determined to pause charging at least one of the plurality of batteries, while continuing charging a remaining battery of the plurality of batteries based on the context information associated with the plurality of batteries, controlling to pause charging of the at least one battery of the plurality of batteries and perform charging of the remaining battery of the plurality of batteries using the external power based on the context information associated with the plurality of batteries.

10. The method of claim 9, wherein the second application consumes an amount of electrical power greater than an amount of electrical power consumed by the first application.

11. The method of claim 9 or 10, wherein the context information associated with the plurality of batteries includes at least one of temperature information associated with each of the plurality of batteries detected by a respective plurality of temperature sensors (440) of the electronic device, the method further comprising:
detecting temperatures associated with the plurality of batteries using the plurality of temperature sensors (440) disposed respectively in different positions of the electronic device; and
based on the detected temperatures, controlling to pause the charging of a battery whose temperature is higher than a threshold temperature and perform charging of a battery whose temperature is lower than the threshold temperature, among the plurality of batteries.

12. The method of any one of claims 9 to 11, further comprising:
identifying whether a state of a first housing (210) and a second housing (220) is a folded state in which the first housing (210) and the second housing (220) are disposed to face each other, an unfolded state, or an intermediate state in which the first housing (210) and the second housing (220) are partially folded, wherein the first housing (210) and the second housing (220) are rotatably coupled to each other, a first battery (289a) is disposed in the first housing, and a second battery (289b) is disposed in the second housing; and
based on identifying the state of the first housing and the second housing, identifying whether the plurality of batteries are arranged adjacent to each other.

13. The method of claim 12, further comprising,
in response to identifying that the state of the first housing and the second housing is the folded state, controlling to pause charging of the first and second batteries.

14. The method of claims 12 or 13, further comprising:
in response to identifying that the state of the first housing and the second housing is the intermediate state or the unfolded state, identifying which of the first housing and the second housing is not in contact with an external object; and
controlling to pause charging of a battery disposed in one of the first housing and the second housing, which is in contact with the external object and perform charging of a battery disposed in the other one of the first housing and the second housing, which is not in contact with the external object.

15. A storage medium storing at least one computer-readable instruction, the at least one instruction, when executed by at least one processor (120, 420) of an electronic device (101) comprising a plurality of batteries, enabling the electronic device (101) to perform at least one operation, the at least one operation comprising:
identifying that the plurality of batteries (289a, 289b, 389a, 389b, 389c, 489) are being charged using external power;
identifying an application being executed while the plurality of batteries are being charged using the external power; and
in case that the application being executed corresponds to a first application, continuing charging the plurality of batteries using the external power;
in case that the application being executed corresponds to a second application:
determining whether to pause charging all of the plurality of batteries, or to or continue charging all of the plurality of batteries, or to pause charging at least one of the plurality of batteries, while continuing charging a remaining battery of the plurality of batteries, based on context information associated with the plurality of batteries, and
if it is determined to pause charging at least one of the plurality of batteries, while continuing charging a remaining battery based on the context information associated with the plurality of batteries, controlling to pause charging of one battery of the plurality of batteries and perform charging of a remaining battery of the plurality of batteries using the external power based on the context information associated with the plurality of batteries.
